(19) Europäisches Patentamt
European Patent Office
Office européen des brevets

(11) **EP 4 468 012 A1**

(12) **EUROPEAN PATENT APPLICATION**

(43) Date of publication:
**27.11.2024 Bulletin 2024/48**

(21) Application number: **23175178.5**

(22) Date of filing: **24.05.2023**

(51) International Patent Classification (IPC):
**G01S 3/04** (2006.01)     **G01S 3/16** (2006.01)
**G01S 3/18** (2006.01)

(52) Cooperative Patent Classification (CPC):
**G01S 3/043; G01S 3/046; G01S 3/16; G01S 3/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **AARONIA AG
54597 Strickscheid (DE)**

(72) Inventor: **Chmielus, Thorsten
54597 Strickscheid (DE)**

(74) Representative: **Hermann, Felix
Boehmert & Boehmert
Anwaltspartnerschaft mbB
Pettenkoferstrasse 22
80336 München (DE)**

(54) **DEVICE AND METHOD FOR DIRECTION-FINDING**

(57) This disclosure relates to a device including a processing unit that processes discretized radio signals received by different antenna elements. The processing unit generates, for each signal source of which radio signals are contained in the received signals, an association between a bearing angle bin indicative of a bearing of the respective signal source and a frequency bin indicative of a frequency the radio signal of said respective signal source, and further signal information comprising at least one of power level information of the radio signal of the respective signal source, amplitude information of the radio signal of the respective signal source and/or information on the modulation scheme of the radio signal of the respective signal source. A display displays a view showing a range of bearing angles and a range of frequencies. The view further visualizes, for each of signal source, an information of the signal source derived from the signal information of the respective signal source at its associated frequency and bearing.

Fig. 13

EP 4 468 012 A1

**Description**

**Field of the Invention**

This disclosure generally relates to radio-direction finding and the processing of antenna signals in such applications for generation of views for display that promote a more intuitive understanding of the radio-direction finding results. This disclosure further relates to signal multiplexing, synchronization and/or demultiplexing for transmission and reception of multiplexed signals including radio signals and a broadband noise signal. These multiplexing, synchronization and/or demultiplexing techniques may be for example used in radio direction-finding applications.

**Technical Background**

(Radio) direction finding ((R)DF) is commonly refers to the use of specialized instruments, antennas and methodologies to determine a physical location of a source of radio frequency (RF) energy. Equipment for DF/RDF - sometimes also called radio direction finder - commonly refers to a device for finding the direction, or bearing, to a radio source. In principle, RDF equipment can be used with any radio source, although the size of the receiver antennas is a function of the wavelength of the radio signals. Such equipment commonly uses an array of antenna elements that receive the radio waves of target radio signals to determine the direction/bearing in which a radio station or an object is located. The radio waves may be for example radio signals transmitted by means of wireless communication technologies (e.g. Bluetooth, 3GPP based wireless communication (e.g. in 4G (LTE/LTE-A)-, 5G-, 6G-based communication networks), Wireless Local Area Networks (WLAN), etc.), radio and television broadcast systems, radar applications, etc. Hence, equipment for DF/RDF may be configured determined the origin of radio signals in one or more frequency bands, including and not limited to the high frequency band (HF - 3-30 MHz), very high frequency band (VHF - 30-300 MHz), ultra high frequency band (UHF - 300-3,000 MHz), super high frequency band (SHF - 3-30 GHz) and/or extremely high frequency band (EHF - 30-300 GHz).

Generally, the methodologies for deriving a direction/bearing from variations in signal amplitude, signal frequency and/or phase to determine the direction (e.g. bearing and azimuth) towards the radio source. Known methodologies of direction finding are use Power of Arrival (PoA) of the received signals, Doppler shift (Doppler DF system), the Watson-Watt principle (typically using Adcock antennas or crossed-loop antennas), correlative interferometry (also known as vector matching), the time difference of arrival (TDOA) of the radio signals received by the antenna array. Also hybrid methodologies are sometimes used. An overview and introduction on DF/RDF is provided for example in the publication by Rhode & Schwarz, "Introduction into Theory of Direction Finding", Radiomonitoring & Radiolocation Catalog 2010/2011, available at https://cdn.rohde-schwarz.com/us/campaigns_2/a_d/Introduction-Into-Theory-of-Direction-Finding.pdf and incorporated herein by reference.

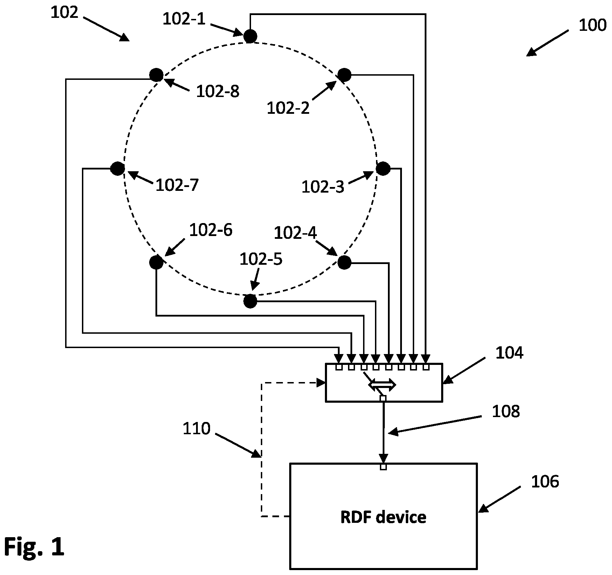

Conventional DF/RDF equipment sometimes uses only a single receiver (or a lower number of receivers in comparison to the number of antenna elements) to lower the data rate and costs of the DF/RDF equipment. Fig. 1 shows an exemplarily DF/RDF system 100 with an antenna array 102 of 8 antenna elements numbered 102-1 to 102-8, which are in a circular arrangement. Each of the antenna elements 102-1 to 102-8 is connected via a radio frequency connection (e.g. coax cable) to a switching device 104, which is an 8-port switch in this example. The individual ports of the switch 104 are indicated by the small squares. The input ports of the switch 104 are thus connected via respective the radio frequency lines to the antenna elements 102-1 to 102-8. The output port of the switch 104, which is also indicated by a small square, connects to the RDF device 106 via another radio frequency connection (e.g. coax cable). Further, the RDF device 106 connects to switch 104 via a control line 110. The connection 110 between the RDF device 106 and switch 104 is typically a data connection, e.g. an Ethernet connection, and allows to the RDF device 106 to control switching individual input ports of the switch 104 to the RDF device 106 via the output port of the switch 104. Typically, the RDF device 106 will control the switch 104 via line 110 to cyclically switch the input ports in sequence, i.e. one-after-another, to the output port so that the antenna signals received at the individual input ports are provided to the output port of the switch 104 (and hence the RDF device 106) in a kind of time-multiplexed fashion, i.e. the antenna signal of a given one of the antenna elements 102-1 to 102-8 is provided to the RDF device 106 while its corresponding in input port of the switch 104 is connected to the output port of the switch 104. Typically, the RDF device 106 controls the switch 104 via line 110 to switch its output port to the next input port (and hence next antenna element) in predetermined intervals so that all input ports are cyclically connected to the output port of the switch 104 in each cycle. As the RDF device 106 controls the switching of the switch 104, the RDF device 106 is also aware at any time, which of the antenna signals of the antenna elements 102-1 to 102-8 is received at the input port of RDF device 106 (which is also indicated by a small square).

Using the radio signals provided from the different antenna elements 102-1 to 102-8 in time-division multiplexed fashion as described in connection with Figure 1, the RDF device 106 can perform radio direction finding using conventional methodologies.

While the above architecture described in connection with Figure 1 is very suitable to perform RDF on the radio signals with long data bursts (for example in the range of more than 20 ms) or on time continuous radio signal, the above architecture of the system 100 is less suitable for RDF on very short radio signals, for example pulsed radio signals or data bursts, which have a duration in the range of about 100 μs, which may for example occur in radar applications or in modern mobile communication systems. To perform RDF on such very short radio signals, the cycle for switch 104 to "rotate" through the antenna elements 102-1 to 102-8 must be selected accordingly, which imposes a drastic reduction of the cycle duration for rotating through antenna elements 102-1 to 102-8. Accurate control of the switching of the switch 104 via the control line 110 as shown in Figure 1 often proves to be difficult, as the controller connection RDF device 106 and the switch 104 is often implemented by means of protocols that have high latency (for example via Ethernet). The use of alternative high-speed data links for control, which however increases costs significantly and might be problematic too (e.g. the RDF device 106 might be located quite far remote from the switch 104 and the antenna error rate 102).

**Summary**

In the light of the above, there may be a need for improving the architecture of the system 100 to facilitate RDF for very short radio signals. As will become more apparent, however, the solution discussed herein below are not limited to RDF for very short radio signals but are generally applicable to RDF for any radio signals. Further, this disclosure aims to provide the user with views of the RDF results in a more intuitive presentation.

One aspect of this disclosure is based on an architecture of a system 100 which is similar to that shown in Fig. 1. Different from the system in Fig. 1 a signal of broadband noise source (e.g. a noise generator) is cyclically provided to a receiver unit as part of the switch "rotating" through (at least some of) its input ports. The cyclic reception of the broadband noise signal at the receiver unit (as part of the signals received from the switch) enables the receiver unit to determine the cycle (duration of the cycle) of the switch when "rotating" through (at least some of) its input ports. The receiver unit may use this cycle for synchronization and/or demultiplexing/separation of the individual signals received from the switch in a time-multiplexed fashion.

One example embodiment that is based on this aspect provides a system comprising a (integer) number of N≥2 antenna elements for receiving radio waves of a radio frequency signal and a (integer) number of M<N receiver units, wherein at least one of the receiver units is connected via a switch to at least two of the N≥2 antenna elements and a broadband noise source. The switch connects the at least one receiver unit cyclically and in a known or configured order/pattern to the broadband noise source and the at least two antenna elements. Further, the receiver unit can distinguish the signals received from the at least two antenna elements based on the cycle of the cyclically received signals of the broadband noise source. The cycle of the cyclically received signals of the broadband noise source may be also referred to as an interval or time period between periodic repetitions of the broadband noise signal as received by the receiver unit.

In a further embodiment, the at least one receiver unit is configured to receive time-division multiplexed signals of the at least two antenna elements and the broadband noise source from the switch. Further, the receiver unit synchronizes with the time-division multiplexed signals based on the cycle of the cyclically received signals of the broadband noise source to distinguish and/or separate the individual signals from each other. Time-multiplexed may for example mean in this context that the signal received at the receiver unit from the switch contains alternatingly and cyclically intermittent signal portions from the at least two antenna elements and the broadband noise source.

In one example implementation, the at least one receiver unit is connected to the switch via an RF line (e.g. a coax cable) or a fiber optic line (e.g. using RF over Fiber - RFoF). In a further example implementation, the at least two antenna elements are connected to the switch via an RF line (e.g. a coax cable or waveguide) or a fiber optic line (e.g. using RF over Fiber - RFoF).

According to a further example embodiment, the system further comprises a radio direction-finding device that performs a radio direction-finding of the radio frequency signal based on the signals received from the at least two antenna elements. Optionally, the radio direction finding unit may be use additional signals received by another one or other ones of the N≥2 antenna elements for direction finding. The additional signals received by the other one or other ones of the N≥2 antenna elements may be for example received by one or more additional receiver units of the system. The M receiver units of the system may be comprised by the radio direction-finding device or may be standalone devices, which may be connected to the radio direction-finding device by means of a data interface.

In another, further embodiment, the receiver unit further determines the cycle (cycle duration) of the cyclically received signals of the broadband noise source. Based on this cycle, the receiver unit can then determine the switching cycle between the received signals from the broadband noise source and the at least two antenna elements (i.e. the time-multiplex structure in the time domain) based on the cycle of the cyclically received signals of the broadband noise source (i.e. the periodic repetitions of the broadband noise signal).

In one example implementation of the embodiments herein above, the system may comprise one receiver unit, i.e. M=1. In this example implementation, the switch connects the receiver unit cyclically and in the known or configured order/pattern to the broadband noise source and the at least two of N antenna elements. This may be suitable for situations, where not all input ports of the switch are connected to antenna elements or where only selected input ports are to be switched via the outport port of the switch to the receiver unit. In another example implementation of the embodiments herein above, the system may comprise one receiver unit, i.e. M=1. In this example implementation, the switch connects the receiver unit cyclically and in the known or configured order/pattern to the broadband noise source and the N antenna elements, i.e. all antenna elements.

In a further example implementation, the system may comprise more than one receiver units. For example, the system could comprise M≥2 receiver units and at least N=2·M antenna elements. In such case, the system may comprise M switches, wherein each of the M switches is configured to connect one of the M receiver units cyclically and in a known or configured order/pattern to the broadband noise source and at least two of the N antenna elements. Notably, the M switches may be connected to distinct subsets of the antenna elements. Further, each of the M receiver units can distinguish the signals received from the at least two antenna elements based on the cycle of the cyclically received signals of the broadband noise source in the manner described in this disclosure.

In some exemplary use case and in accordance with an example embodiment, the radio frequency signal is a pulsed signal or a signal burst. The cycle (cycle duration) of the switch (sometimes also referred to as rotation cycle) is selected or is configurable based on the duration of the pulse or burst, respectively. In another exemplary use case and in accordance with an example embodiment, the radio frequency signal is a pulsed signal or a signal burst. In this case, the cycle of the switch may be equal to or less than the pulse duration of the pulsed signal. In the above example, the duration of the pulse or burst is (in the range of) 500 μs or less, preferably, (in the range of) 100 μs or less.

In accordance with a further embodiment the switch is further configured to connect the receiver unit automatically (e.g. without external triggering of the switching times) and cyclically in the known or configured order/pattern to the broadband noise source and the at least two antenna elements.

In a further embodiment, the broadband noise source and the at least two antenna elements are connected to different input ports of the switch and the receiver unit is connected to the output port of the switch. The duration of the cycle of the switch with which the switch connects the different input ports of the switch in the known or configured order/pattern to the output port of the switch (also referred to as rotation cycle) may be - in one example implementation - configurable or adjustable, e.g. via a control interface of the switch. Moreover, the input ports of the switch to be connected to the output port of the switch and/or the known or configured order/pattern may (also) be configurable or adjustable. This may for example allow to select only individual input ports/antenna elements. Further, this may also allow to define the order in which the antenna elements are switched to the receiver unit.

Another aspect of this disclosure and embodiment relates to a method for separating (or demultiplexing) time-division multiplexed signals. The method may be for example executed in a receiver unit of a system in accordance with the aspect of the disclosure and its embodiments described herein above and in the detailed description part of this disclosure. The method may comprise the following: receiving via a radio frequency signal line cyclically time-division multiplexed signals, the multiplexed signals including signals of a radio frequency signal received at two or more antenna elements of an antenna array (comprising N≥2 antenna elements) and a signal of a broadband noise source broadband noise source which are cyclically repeated in known or configured order/pattern; determining the cycle of the cyclically repeated signal of the broadband noise source; and separating the signals received from at least two antenna elements based on the determined cycle.

In a further embodiment, the method further comprises receiving the time-division multiplexed signals of the at least two antenna elements and the broadband noise source from a switch that generates the time-division multiplexed signals by cyclically switching between the signals of the two antenna elements and the broadband noise source; and synchronizing with the time-division multiplexed signals based on the cycle of the cyclically received signals of the broadband noise source to distinguish the individual signals from each other. Separating the signals received from at least two antenna elements may be for example based on the synchronization.

The aspects of the disclosure may also be implemented using one or more computer readable media which store(s) instructions that, when executed by a processor of a device (e.g. a device implementing the receiver unit or a radio direction-finding device) cause the device to implement the method for separating (or demultiplexing) time-division multiplexed signals according to one of the various embodiments thereof discussed in this disclosure.

Another aspect of this disclosure provides a device that comprises a processing unit that is to process discretized radio signals received by different antenna elements of an antenna array. The processing unit generates, for each of one or more signal sources of which radio signals are contained in the received signals, an association between a bearing angle bin indicative of a bearing of the respective signal source and a frequency bin indicative of a frequency the radio signal of said respective signal source, and further signal information comprising at least one of power level information of the radio signal of the respective signal source, amplitude information of the radio signal of the respective signal source and/or information on the modulation scheme of the radio signal of the respective signal source. The device may comprise a display unit configured to display a view that shows a range of bearing angles including the bearing angle bin of at least one of the one or more signal sources, and a range of frequencies including the frequency bin at least one of the one or more signal sources. The view further visualizes, for each of said at least one of the one or more signal sources, an information of the signal source derived from the signal information of the respective signal source at its associated frequency and bearing. The bearing angle may be relative to a given reference location, e.g. the geographic location of the antenna array. In general, in this disclosure a view may be based on Cartesian coordinates (e.g. mapping frequency bins and bearing angle bins to x- and y-coordinates, i.e. to a frequency axis and bearing angle axis), polar coordinates (e.g. mapping frequency bins to the radius r and bearing angle bins the angle $\varphi$) or spherical coordinates (e.g. mapping frequency bins to the radius r and bearing angle bins and power levels to the angles $\varphi$ and $\theta$).

Note that in case the system/device can perform triangulation (e.g. using the radio signals received with different antenna arrays geographically spaced from one another), the system/device may generate bearing information and distance information for the respective signal source(s). In this case, the generated association may contain, for each of one or more signal sources of which radio signals are contained in the received signals, an association between a bearing angle bin indicative of a bearing of the respective signal source from a given geographic origin and a direction bin indicative of a distance of said respective signal source from the given geographic origin, and further signal information comprising at least one of power level information of the radio signal of the respective signal source, amplitude information of the radio signal of the respective signal source and/or information on the modulation scheme of the radio signal of the respective signal source. Optionally, the association may further comprise a frequency bin indicative of a frequency the radio signal of said respective signal source.

In an example embodiment, the discretized radio signals processed by the processing unit may comprise one or more sets of time discrete radio signals. Each set represents radio signals received by the different antenna elements of the antenna array. For example, each set may correspond to a rotation through antenna elements of the antenna array as described in connection with the previous aspects of the disclosure herein above. The processing unit may convert, for each of the antenna elements, the time discrete radio signals corresponding to the antenna elements into the frequency domain to obtain frequency domain representations of the radio signals for the different antenna elements. Alternatively, the processing unit may also receive the frequency domain representations of the radio signals for the different antenna elements from another component within the device (e.g. a radio receiver).

In further embodiments, the processor unit may further identify the one or more signal sources based on the signal information in frequency domain representations of the of the radio signals for the respective antenna elements. A signal source can be for example identified by identifying a frequency bin having a signal information fulfilling a predetermined selection criterion/predetermined selection criteria. For example, selection criterion/predetermined selection criteria may be or include the power level or amplitude of a frequency bin of one antenna signal of one or multiple antenna elements exceeding a threshold.

In some example embodiments, the signal information comprises power level information or amplitude information. In this example, the processor unit may perform, for each of the one or more signal sources, direction finding based on the power level or amplitude information of frequency bins associated with the respective signal source in the radio signals of the antenna elements to obtain a bearing angle bin for the respective signal source being indicative of its bearing, thereby establishing said association.

According to further example embodiments, the information visualized for each of the at least one signal source is the signal information of the respective signal source at its associated frequency and bearing. This may be for example the power level or amplitude information of the respective signal source at its associated frequency and bearing. The information visualized for each of the at least one signal source is the signal information of the respective signal source at its associated frequency and bearing may however also be derived from the signal information. For example, instead of displaying the power level or amplitude for the respective signal source, visualized information may also be "binary" (indicating presence of a radio signal originating from a given bearing at the given frequency) or an accumulation of such binary information over a configurable or predetermined time period.

In further embodiments, the information visualized for each of the at least one signal source may be color-coded or brightness-coded to promote a more intuitive understanding of the direction (bearing), frequency and confidence or stability of radio signals of a radio source being received from a given bearing and with the given frequency. However, also alternative representation of the information may be foreseen, such as persistence display (also referred to as phosphor display) of accumulated signal information that may yield the stability of a signal source emitting a radio signal at a given frequency from the detected bearing.

In yet further embodiments, the processing unit receives a sequence of sets of time discrete radio signals. Each set represents radio signals received by the different antenna elements of the antenna array. As noted, each set may for example correspond to a rotation through antenna elements of an antenna array. The processing unit processes each current set of said sequence of sets of time discrete radio signals. The sets of time discrete radio signals may be, for example, received as a stream of data and the processing unit processes each set as it is received by the processing unit. This processing of a given, current set of time discrete radio signals may comprise generating, for each of the one or more signal sources of which radio signals are contained in the received signals, an association between a bearing angle bin indicative of a bearing of the respective signal source and a frequency bin indicative of a frequency the radio signal of said respective signal source comprised in the current set of time discrete radio signals, and further signal information comprising at least one of power level information of the radio signal of the respective signal source comprised in the current set of time discrete radio signals, amplitude information of the radio signal comprised in the respective signal source comprised in the current set of time discrete radio signals and/or information on the modulation scheme of the radio signal comprised in the respective signal source comprised in the current set of time discrete radio signals; and (optionally) combining the signal information of the association of the current set of time discrete radio signals with the signal information of the association of one or more previously processed sets of time discrete radio signals. The display unit successively displays the views (in a time sequence), where each of the views shows a range of bearing angles including the bearing angle bin of at least one of the one or more signal sources, and a range of frequencies including the frequency bin at least one of the one or more signal sources. The view further shows, for each of said at least one of the one or more signal sources, an information derived from the (combined) signal information of the respective signal source at its associated frequency and bearing.

In a further example embodiment, the processing unit combines the signal information by accumulating the signal information of the current set of time discrete radio signals with the signal information of the association of one or more previously processed sets of time discrete radio signals to form said combination. The accumulation may for example be a simple summing operation of the signal information of a configurable or predetermined number of associations, an arithmetic or weighted average of the signal information of a configurable or predetermined number of associations, a mean value of the signal information of a configurable or predetermined number of associations, etc. The resultant accumulated signal information may be displayed in a view to allow distinguishing different accumulated values of the signal information, e.g. by means of color-coding or brightness-coding, as noted above. For example, the one or more previously processed sets of time discrete radio signals is a predetermined or configurable number of one or more previously processed sets of time discrete radio signals, so that the successive display of the views realizes a persistence display of the signal information.

Further, in another exemplary embodiment, the view further comprises a camera image that is viewed adjacent to the information of the signal source derived from the signal information of the one or more signal sources and is aligned with the bearing angle axis. This may facilitate a more intuitive understanding and matching of the bearing determined by RDF and its association within the real-world scenery perceived by the user. In yet another exemplary embodiment, which may be or may not be combined with the display of a camera image, the view may contain a representation of the associations using polar coordinates. This presentation of the associations using polar coordinates may be for example overlayed to a (two dimensional) map, wherein the map may be for example centered at the (geographical) location of the antenna array. The radius of the polar coordinates may be mapped to the frequency bin of the respective associations, whereas the angle of the polar coordinates may be mapped to the bearing angle bin of the respective associations. The power level and/or amplitude information of the respective associations may be for example color coded or brightness coded at the corresponding radius and angle of the associations.

Another aspect of the disclosure relates to a method that encompasses the operations and functionality of the previous aspects of the disclosure. The method comprises, for example, processing discretized radio signals received by different antenna elements of an antenna array. As part of this processing, for each of one or more signal sources of which radio signals are contained in the received signals, an association is generated, wherein the association is an association between a bearing angle bin indicative of a bearing of the respective signal source and a frequency bin indicative of a frequency the radio signal of said respective signal source, and further signal information comprising at least one of power level information of the radio signal of the respective signal source, amplitude information of the radio signal of the respective signal source and/or information on the modulation scheme of the radio signal of the respective signal source. Further, the method comprises generating a view that shows a range of bearing angles including the bearing angle bin of at least one of the one or more signal sources, and a range of frequencies including the frequency bin at least one of the one or more signal sources, wherein the view further visualizes, for each of said at least one of the one or more signal sources, an information of the signal source derived from the signal information of the respective signal source at its associated frequency and bearing; and may optionally comprise causing a display unit to display the view.

In another embodiment, the method further comprises identifying the one or more signal sources based on the signal information in frequency domain representations of the of the radio signals for the respective antenna elements. A signal source may be identified by identifying a frequency bin having a signal information fulfilling a predetermined selection criterion/predetermined selection criteria, as noted above. In one example embodiment, the signal information comprises power level information or amplitude information. The method may further comprise perform, for each of the one or more signal sources, direction finding based on the power level or amplitude information of frequency bins associated with the respective signal source in the radio signals of the antenna elements to obtain a bearing angle bin for the respective signal source being indicative of its bearing, thereby establishing said association.

In another embodiment, the method may comprise receiving a sequence of sets of time discrete radio signals. Each set represents radio signals received by the different antenna elements of the antenna array. As noted, each set may for example correspond to a rotation through antenna elements of an antenna array. The processing unit processes each current set of said sequence of sets of time discrete radio signals. The sets of time discrete radio signals may be, for example, received as a stream of data and the processing unit processes each set as it is received by the processing unit. The processing of each current set of said sequence of sets of time discrete radio signals may include generating, for each of the one or more signal sources of which radio signals are contained in the received signals, an association between a bearing angle bin indicative of a bearing of the respective signal source and a frequency bin indicative of a frequency the radio signal of said respective signal source comprised in the current set of time discrete radio signals, and further signal information comprising at least one of power level information of the radio signal of the respective signal source comprised in the current set of time discrete radio signals, amplitude information of the radio signal comprised in the respective signal source comprised in the current set of time discrete radio signals and/or information on the modulation scheme of the radio signal comprised in the respective signal source comprised in the current set of time discrete radio signals; and combining the signal information of the association of the current set of time discrete radio signals with the signal information of the association of one or more previously processed sets of time discrete radio signals. Further, the method may comprise generating views, where each of the views shows a range of bearing angles including the bearing angle bin of at least one of the one or more signal sources, and a range of frequencies including the frequency bin at least one of the one or more signal sources, wherein the view further shows, for each of said at least one of the one or more signal sources, an information derived from the combined signal information of the respective signal source at its associated frequency and bearing; and causing the display unit to successively display the views as they are generated. The views may therefore be shown to a user in a time sequence of views in a kind of video-like fashion where the screen is updated continuously based on the results of the sequential processing of sets of time discrete radio signals. As noted above, the combination of the signal information may be realized by some sort of accumulation of the signal information of the current set of time discrete radio signals with the signal information of the association of one or more previously processed sets of time discrete radio signals to form said combination. In one example embodiment, the one or more previously processed sets of time discrete radio signals is a predetermined or configurable number of one or more previously processed sets of time discrete radio signals, so that the successive display of the views realizes a persistence display of the signal information.

According to another embodiment, the view further comprises a camera image that is viewed adjacent to the information of the signal source derived from the signal information of the one or more signal sources and is aligned with the bearing angle axis.

The aspects of the disclosure may also be implemented using one or more computer readable media which store(s) instructions that, when executed by a processor of a device cause the device to implement the method for processing the discretized radio signals of an antenna array and generating one or more views to visualize the processing results.

## Brief Description of Drawings

The following detailed description refers to the accompanying drawings. The same reference numbers are used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

**Fig. 1** shows a system 100 suitable for RDF;

**Fig. 2** shows a system 200 suitable for RDF according to an embodiment of the disclosure;

**Fig. 3** shows a system 300 suitable for RDF according to another embodiment of the disclosure;

**Fig. 4** shows an example embodiment a method for separating (or demultiplexing) time-division multiplexed signals according to another embodiment of the disclosure;

**Fig. 5** shows an example embodiment a device implementing the aspects of the disclosure using software instructions;

**Fig. 6** shows an example embodiment of a method for processing radio signals as received, for example, from an antenna array 102;

**Fig. 7** is a simplified example to highlight the identification of the candidate signal source(s) in the frequency domain representation of the discrete radio signals received by different antenna elements of an antenna array in accordance with an embodiment;

**Fig. 8** shows an example of a two-dimensional view of the associations for the candidate signal sources 1 and 2 (see Fig. 7) as determined in step 606 of Fig. 6;

**Fig. 9** shows an example embodiment of a method for processing sets of radio signals as received, for example, from an antenna array 102;

**Fig. 10** is another simplified example to highlight the identification of the candidate signal source(s) in the frequency domain representation of the discrete radio signals received by different antenna elements of an antenna array in accordance with an embodiment;

**Fig. 11** shows another example of a two-dimensional view of the associations for the candidate signal sources 1 and 2 (see Fig. 10) as determined in step 606 of Fig. 9;

**Fig. 12** shows another example of a two-dimensional view of the aggregation of multiple associations according to an example embodiment;

**Fig. 13** shows an example view 1300 of an aggregation of associations for a substantially higher resolution of frequency and bearing using Cartesian coordinates in accordance with an example embodiment;

**Fig. 14** shows another example view 1400 of an aggregation of associations for a substantially higher resolution of frequency and bearing using Cartesian coordinates and a camera image aligned with the bearing in accordance with an example embodiment; and

**Fig. 15** shows an example view 1500 of an aggregation of associations for a substantially higher resolution of frequency and bearing using polar coordinates and their overlay with a map in accordance with an example embodiment.

## Detailed Description

This disclosure generally relates to improvements to an architecture of the system 100 to facilitate RDF for very short radio signals. The solutions discussed herein below are however not limited to RDF for very short radio signals but are generally applicable to RDF for any radio signals.

As noted above, one aspect of this disclosure can be considered based on an architecture of a system 100 which is similar to that shown in Fig. 1. In this architecture, the RDF device 106 actively controls the switching of the switch 104 from one input port to the next input port in sequence. Please note that switching between input ports is considered equivalent to switching between antenna elements 102-1 to 102-8, as each input port is connected to a respective one of the antenna elements 102-1 to 102-8.

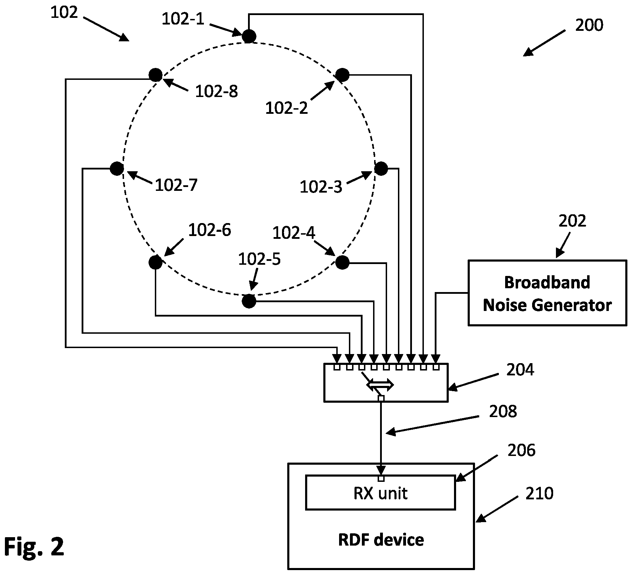

**Fig. 2** shows an example system 200 suitable for RDF according to an embodiment of the disclosure. The main difference of the system 209 in Fig. 2 over system 100 in Fig. 1 is the use of a broadband noise generator 202, which acts as a broadband noise source and provides a broadband noise signal to the switch 204. Switch 204 in Fig. 2 is substantially similar to the switch 104 in Fig. 1, the main difference being that one of the input ports of switch 204 is connected to the broadband noise generator 202 to receive the broadband noise signal. As the switch 204 "rotates" through its input ports (i.e. connects the input ports to the output port of the switch 104 in a predetermined order and repeating sequence) the broadband noise signal of the broadband noise generator 202 is provided to the receiver unit 206 at the times when the output port of the switch 204 is connected to the input port of switch 204 that receives the broadband noise signal from the broadband noise generator 202. Hence, the receiver unit 206 will be able to observe the broadband noise signal on the radio signal line 208 in a given cycle (or interval), and the periodic repetitions of the broadband noise signal of the broadband noise signal on the radio signal line 208 can be considered a clock signal that allows to the receiver unit 206 to synchronize to the sequence of signals from the different input ports that are multiplexed by the switch 204 to its output port in a time-division fashion. Hence, the broadband noise signal of the broadband noise signal is cyclically provided via the radio signal line 208 to a receiver unit 206 as part of the switch 204 "rotating" through (at least some of) its input ports. The cyclic reception of the broadband noise signal at the receiver unit 206 (as part of the signals received from the switch 204) enables the receiver unit 206 to determine the cycle (duration of the cycle) of the switch 204 when "rotating" through (at least some of) its input ports. The receiver unit 206 may use this cycle for determination of the time-multiplex structure of the signal on the radio signal line 208 allowing for demultiplexing/separation of the individual signals received from the switch 204 in the time-multiplexed fashion. The receiver unit 206 may be incorporated (e.g. physically) into the RDF device 210, but may also be implemented as a standalone device which has a data interface to the RDF device 210.

The broadband noise generator 202 may generate a noise signal that is, for example, Additive White Gaussian Noise (AWGN), 1/f noise, or another noise like signal. The broadband noise signal should be preferably at a power level that allows its unambiguous distinction from the expected noise floor (e.g. AWGN noise floor) of the radio signals received with the antenna array 102. For example, the power level of the broadband noise signal that is generated and output by the broadband noise generator 202 is (at least) 2 dB, preferably, (at least) 3dB higher than the expected noise floor of the radio signals received with the antenna array 102. In one example, the receiver unit 206 may further estimate the noise floor in the input signals from the antenna elements and may adjust, via a feedback connection to the broadband noise generator 202, the power level of the broadband noise signal to be at the desired power level higher than the noise floor.

In general, the noise signal of the broadband noise generator 202 does not have to be broadband, as long as the noise signal has a sufficient power level at frequency components that are distinguishable from the target radio signals (i.e. in terms of carrier frequency, bandwidth, etc.) in signal processing by the receiver unit 206. The use of a broadband noise signal, e.g. an AWGN signal, may be advantageous as it ensures that the signal power spreads over a broad spectrum of frequency components so that the signal is distinguishable from target radio signals in all practical frequency bands, noting that the system 200 may be used for RDF of radio signals in one or more different frequency bands, including HF, VHF, UHF, SHF and/or EHF. Alternatively, also other non-noise like signals could be used to implement the "clock signal", e.g. the broadband noise generator 202 could be replaced by a signal generator that produces a time-continuous or pulsed signal, e.g. a pilot-like signal, that is clearly distinguishable in the receiver unit 206 from the target radio signals to received by the antenna array 102. However, the use of a noise signal may be advantageous, as noise signals are likely causing less disturbance/interference with the signals received from the antenna array 102 in the receiver chain of the receiver unit 206.

The switch 204 (which may also be denoted a multiplexer) may be realized by any suitable (broadband) RF switch, e.g. a SP4T-type, SP8T-type or SP16T-type switch. STxT-type broadband RF switches are readily available in the IC marked. For example, the switch 204 could be an UltraCMOS SP8T RF Switch PE42582 by pSemi (Murata) which is an enhanced absorptive SP8T RF switch with eight input ports that supports a frequency range from 9 kHz to 8 GHz.

In system 200 the connection between the switch 204 and the receiver unit 206 (in the example of Fig. 2, the connection is represented by the single radio signal line 208) may be realized by means of any suitable RF connection, e.g. a RF cable, a coax cable (e.g. with BNC connectors), an optical cable (e.g. when using RFoF), free-space optical communication (e.g. laser connection via air) or any other suitable RF connection or RF cable that has low capacitance and tight impedance stability. The connection between the switch 204 and the antenna elements 102-1 to 102-8 may be realized by means of any suitable RF connection, e.g. a RF cable, a coax cable (e.g. with BNC connectors), an optical cable (e.g. when using RFoF), using waveguides, or any other suitable RF connection or RF cable that has low capacitance and tight impedance stability.

The antenna array 102 in Fig. 2 is shown as a circular arrangement of eight antenna elements 102-1 and 102-8. The disclosure is not limited to any particular number of antenna elements in the antenna array or any particular type of antenna. The antenna elements may be broadband antennas to cover signal reception in a broad spectrum (e.g. multiple of the frequency bands), but the antenna elements may also be designed for specific applications and/or frequency bands or ranges. The number of antennas in the array and/or their physical arrangement relative to each other may be for example determined by the RDF methodology used to find the bearing towards the target radio signal. Hence, the use of eight antenna elements 102-1 to 102-8 in a circular arrangement is exemplary only. Thus, the antenna array 102 may comprise more than or less than eight antenna elements, but in any case two or more antenna elements (N $\geq$ 2). The antenna elements may be arranged in a (single) circular arrangement, in a double circular arrangement (antenna elements are arranged in two circles), in a square arrangement or double square arrangement, etc. Further, some antenna arrays may have an antenna element in the center of the antenna arrangement and/or odd number of antenna elements. The antenna elements of the antenna array 102 may be sensitive to the direction arrival of the target radio signals, e.g. directional antenna elements. For example, the antenna elements in the array 102 may be monopole antennas, dipole (e.g. with reflector to ensure directivity), Yagi antennas, Horn antennas, parabolic dish antennas, patch antennas, etc. or any other suitable directional antenna.

The receiver unit 206 may be any suitable receiver. The bandwidth of the receiver unit may impact (along with the antenna array) the frequency range of the signals that can be subjected to direction finding. For example, the receiver unit 206 may be a broadband receiver so that for example the receiver unit 206 can cover substantially all target frequencies of the signals to be subjected to direction finding. The receiver unit 206 may be also a tunable receiver which can be tuned to target carrier frequency. In addition or alternatively, the bandwidth of the receiver unit 206 may be configurable.

Although the RDF methodology is not limited to Power of Arrival (PoA)-based DF methodologies and for example only, the RDF device 210 is assumed to perform RDF using a Power of Arrival (PoA)-based DF methodology, which is based on the received power for individual frequency bins obtained by the different antenna elements of the antenna array 102. Since the receiver unit 206 can detect the cycle of the switch 204 rotating through the input ports based on the cyclically repeating noise signal from the broadband noise generator 202 at its input port, the receiver unit 206 can synchronize to and/or identify the time division structure of the multiplexed signals, i.e. the signal portions corresponding to the received signals at the different antenna elements of the antenna array 102. The receiver unit 206 may perform analog-to-digital conversion (ADC) of the input signal. The detection of the rotation cycle of the switch 204 is based either on the time-continuous input signal at the input port or the discrete version of the input signal obtained from ADC.

In some example implementation of the receiver unit 206 receives the time-continuous input signal at the input port and provides in-phase (I) and quadrature (Q) components of the time-continuous input signal, wherein each of the I-component and the Q-component of the time-continuous input signal is subjected to ADC separately. Hence, the receiver unit 206 may provide the I- and Q-samples of the input signal at the input port of the switch 204.

The receiver unit 206 may associated the time-continuous input signal at the input port or the discrete version of the input signal obtained from ADC with information on its corresponding antenna element and/or sector for RDF. For example, the time-discrete versions of the I-samples and Q-samples of the input signal obtained from ADC may be associated with information on its corresponding antenna element and/or sector for RDF. The I- and Q-samples of the input signal at the input port of the switch 204, and the information on the antenna element on which they were received (or the sector/bearing associated with the antenna element) may form the basis of subsequent RDF processing. The receiver unit 206 may convert the discrete input signal portions of the different antenna ports (e.g. the I-samples and Q-samples) into the frequency domain (e.g. by means of a Fast Fourier Transform (FFT) or Discrete Cosine Transform (DCT)). For example, the I-samples and Q-samples of the input signal for each of the antenna elements may be converted into the frequency domain individually. The resultant frequency domain signals for the different antenna elements will include the power level for the different frequencies (or frequency bins) of the input signal portion corresponding to the respective antenna element. Further, the receiver unit 206 may provide, for each antenna element from which signals are received, a continuous sequence or data stream of power level-frequency bin pairs over the monitored frequency range for each signal portion from a respective antenna element. Pairs of continuous sequences or data streams of power level-frequency bin pairs may be provided for the I-component and the Q-component for each signal portion from a respective antenna element. The (pair of) continuous sequence(s) or data stream(s) may also include an indication of the antenna element and/or sector information corresponding to the antenna element to facilitate the RDF device 210 to perform RDF. The continuous sequences or data streams for the different antenna elements (and the indication of the antennal elements and/or sectors tow which they belong) may be provided to the RDF device 210 for determining a direction/bearing of a radio signal source using any conventional Power of Arrival (PoA)-based DF methodology.

Alternatively or in a hybrid DF scheme, the receiver unit 206 may also determine the amplitudes for the signal components for the different frequency bins and provide, for each of the antenna elements, the amplitudes for the different frequencies (or frequency bins) of the input signal may be provided to the RDF device 210 for determining a direction/-bearing of a radio signal source. Optionally, the frequency domain representations of the individual input signal portions corresponding to the antenna elements may be filtered (e.g. using a Kalman filter) to increase the angular resolution of the DF by the RDF device 210. The filtering may be implemented in the receiver unit 206 (in which case filtered data streams are provided to the RDF device 210) or in the RDF device 210.

Further alternatively or in a hybrid DF scheme, phase shifts of the radio signal received at the different antenna elements 102-1 to 102-8 may be exploited for RDF. In this case, the frequency of the radio signals to be subjected to direction finding should be higher than (e.g. at least twice) frequency of the frequency of cycle of the switch 204's rotation divided by the number of input ports (i.e. connected antenna elements plus one to account for the broadband noise signal) which are cycled through. In this case, the receiver unit 206 may also determine relative phase offsets between the (time continuous or discrete) input signal portions of the different antenna elements and may report that information to the RDF device 210.

In the example embodiment of system 200 as shown in Fig. 2, it is assumed that there is one receiver unit 204 (M=1) only and one switch 204 having all N antenna elements 102-1 to 102-8 and the broadband noise generator coupled to its input ports. This is however only exemplary and various modifications as to the number of available receiver units and/or number of antenna elements and/or number of switches 206 are possible. Furthermore, one or more of switches 206 may be used to connect different antenna arrays (e.g. provided at different physical locations) to one or more receiver units 206, the output data streams of which may be subjected to RDF processing in the RDF device 210 (e.g. this may allow for triangulation or determination of the radio signal source's location). Moreover, it is also possible to connect distinct subsets of the antenna elements 102-1 to 102-8 of the antenna array 102 via multiple switches to multiple receive units 206 that can process the signals in parallel (the number of switches and receiver units corresponding in number of the number of subsets of antenna elements). Individual antenna elements may also be directly coupled to dedicated receiver units in a 1-to-1 fashion without an intermediate switch 204 (which may however be undesirable in certain applications due to the higher number of RF connections and receiver units being required).

The system 200 suggested in Fig. 2 and its operation may for example provide the following advantages. Since the system 200 generates its own clock by injecting the broadband noise signal into one of the input ports of the switch 204, the receiver unit 206 can recover the cycle duration from the multiplexed signal on the radio frequency line 208, and may use this information to synchronize to the multiplexed signal structure of the multiplexed signal on the radio frequency line 208. This further allows the receiver unit 204 to separate or demultiplex the individual multiplexed signals arriving in a time-multiplexed fashion on the radio frequency line 208. For this, the receiver unit 204 does not require any knowledge of the cycle duration, by only information on the number of antenna signals in the multiplexed signal structure (and optionally their individual signal durations if not uniform) may be known to the receiver unit 204 (e.g. by means of configuration). Therefore, the receiver unit 204 may not need any control interface to the switch 204 (e.g. to trigger switching to the next input port as outlined in connection with Fig. 1). This allows for a simpler deployment of the system 200 at reduced costs and complexity. In principle, in some example implementation the switch 204 may inject the broadband noise signal in between the input signals of the antenna elements, which would allow the receiver unit 204 to synchronize and recover the multiplexed signal structure without additional knowledge (however at increased signal processing latency).

Furthermore, as there is no control interface between the receiver unit 206 and the switch 204 for controlling selection of individual input ports, the latency of the control signals for controlling the switch 204 is no longer an issue. Therefore, the switch 204 may autonomously/automatically rotate through the input ports significantly faster in comparison to the scenario in Fig. 1 where the switching from one input port to another is under control by the RDF device 106 via the control link 110. Shorter cycle durations of the switch 204 to rotate through the input ports in turn allows for the capability to measure shorter radio signals, e.g. radio signals which are pulsed or where data transmission is in bursts and have pulse or burst durations of significantly shorter than 20ms. For RDF methodologies exploring PoA or amplitude variations in the received radio signals, the signal power and/or amplitude of the radio signal pulses or bursts should be ideally constant or close to constant in the cycle duration of the switch 204 to obtain accurate determination of the bearing with high confidence. Note that in case of short signal pulses or bursts it might be possible to determine a bearing of a received radio signal also based on repeated transmissions of the signal pulses or bursts, i.e. repeated rotations of the switch 204 and corresponding measurements, where the confidence in the bearing determined by RDF may increase with each RDF operation on input signals of the antenna elements obtained in one of the successive rotations of the switch 204.

In general, the disclosure encompasses scenarios where there are N≥2 antenna elements in an array 102, and there are M<N receiver units 206 and correspondingly M<N switches 204, so that each switch 204 has at least two antenna elements and a broadband noise signal from a broadband noise generator 202 coupled to its input ports.

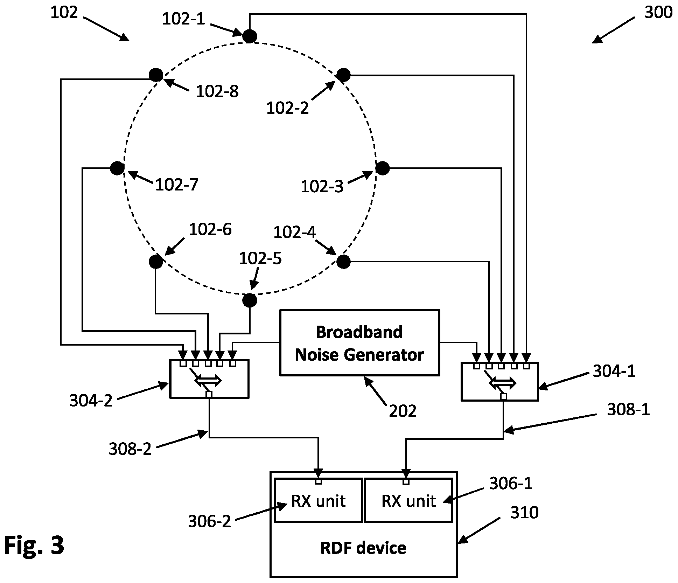

Fig. 3 shows another system 300 suitable for RDF according to another embodiment of the disclosure. In this example implementation, M=2 and N=8. In the example shown in Fig. 3, the antenna array 102 contains eight antenna elements 102-1 to 102-8 as in Fig. 2, which are - however - connected to two switches 304-1 and 304-2Input ports of switch 304-1 are connected to a first subset of antenna elements, including antenna elements 102-1 to 102-4, and the broadband noise generator 202. Input ports of switch 304-2 are connected to a second subset of antenna elements, including antenna elements 102-5 to 102-8, and the broadband noise generator 202. Switches 304-1 and 304-2 are substantially identical to switch 204 in Fig. 2. Each of switches 304-1 and 304-2 thus cycles through their input ports connected to the respective subset of antenna elements and the broadband noise generator 202 to generate a time multiplexed signal as explained in connection with switch 204 above and provides the respective time multiplexed signal to a one of the two receiver units 306-1 and 306-2 via respective RF connections illustrated as a radio signal lines 308-1 and 308-2. RF connections may be implemented in a fashion similar to the RF connection between switch 204 and receiver unit 206 in Fig. 2. The cycle durations of the switches 304-1 and 304-2 may be identical to simplify subsequent signal processing by the RDF device 310, but this is not mandatory.

The two receiver units 306-1 and 306-2 are substantially identical in structure and operation as receiver unit 206 described in connection with Fig. 2. In comparison to the system 200 in Fig. 2, the system 300 as shown in Fig. 3 may allow for reducing the duration of the switching cycle of the switches 304-1 and 304-2 in comparison to the switch 204, as the number of input ports to be multiplexed is reduced. The shorter duration of the rotation cycle may facilitate radio direction-finding for radio signals having event shorter duration. Alternatively, if shortening the duration of the rotation cycle is of less concern in the given application scenario, the time interval where a given input port is connected to the output port of switches 304-1 and 304-2 can be increased in comparison to the case in Fig. 2, if the same duration of the rotation cycle is to be maintained.

Further, the scenario in Fig. 3 shows and example where there is one broadband noise generator 202 shared by switches 304-1 and 304-2. There may be also more than one broadband noise generator 202, e.g. each switch 204, 304-1, 304-2 may have its own broadband noise generator 202 connected to an input port or include its own broadband noise generator 202.

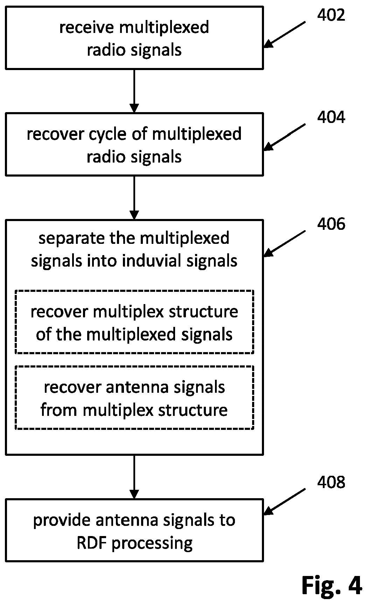

**Fig. 4** shows a flow chart illustrating another aspect of this disclosure. Specifically, Fig. 4 illustrates an example embodiment a method for separating (or demultiplexing) time-division multiplexed signals. The method may be for example executed in a receiver unit 206, 306-1, 3062 of a system 200, 300 or the RDF device 210, 310 in accordance with the aspect of the disclosure.

The method may comprise the following receiving 402 multiplexed radio signals. The multiplexed radio signals may be received via a radio signal line 208, 310-1, 310-2. The multiplexed radio signals may be cyclically time-division multiplexed signals. The multiplexed signals include signals of a radio frequency signal received at two or more antenna elements of an antenna array 102 (comprising N≥2 antenna elements) and a signal of a broadband noise source (e.g.

broadband noise generator 202) which are cyclically repeated in known or configured order/pattern.

The method further comprises recovering 404 the cycle of the multiplexed signals. This may include determining the cycle of the cyclically repeated signal of the broadband noise source, as described above. The cyclically repeated signal of the broadband noise source may be considered forming a clock signal having the determined cycle, which corresponds to one rotation of the switch 204, 304-1, 304-2, and can be used to synchronize the receiver chain of the receiver unit 206, 306-1, 306-2 with the multiplexed signals being received as outlined above in connection with Figs. 2 and 3.

Further, the method comprises separating 406 the signals received from the two or more antenna elements of the array 102 based on the determined cycle. This may include recovering the multiplex structure of the signals received via the radio signal line 208, 310-1, 310-2 based on the determined cycle. Knowing the multiplex structure, the individual signals of the antenna elements can be demultiplexed and/or separated into distinct data streams. To obtain the data streams for the individual antenna elements, the multiplexed signals may be subjected to one or more of ADC, frequency domain conversion, and/or filtering, as discussed herein above. The so obtained (processed) data streams may be provided 408 to RDF processing, for example, to RDF device 210, 310, which may perform RDF on the data streams. However, the embodiments are not limited to the kind of further processing of the demultiplexed antenna signals.

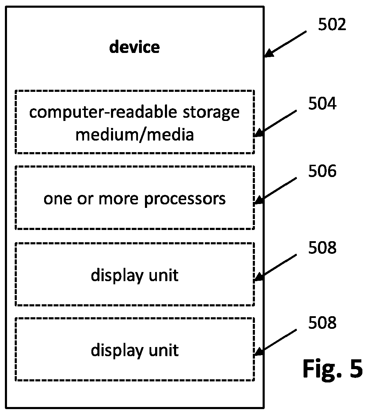

The aspects of the disclosure may also be implemented using one or more computer readable media which store(s) instructions that, when executed by a processor of a device (e.g. a device implementing the receiver unit or a radio direction-finding device) cause the device to implement the method for separating (or demultiplexing) time-division multiplexed signals according to one of the various embodiments thereof discussed in this disclosure. An example embodiment is shown in Fig. 5. A device 502, which could be for example one of switches 204, 304-1, 304-2, one of receiver units 206, 306-1, 306-2, or RDF device 210, 320) may include one or more non-volatile and/or volatile storage media 504 to store software instructions, for example in the format a firmware, operating system, software application, etc. The execution of the instructions by one or more processors 506 of the device 502 will cause the device 502 to perform at least one of the different aspects of this disclosures or the embodiments and implementations described herein with regard to the drawings. Further, the individual operations performed by one of switches 204, 304-1, 304-2, one of receiver units 206, 306-1, 306-2, or RDF device 210, 320 may be embodied in such software instructions that when executed in the respective device will cause the device to perform the corresponding operation(s) as outlined in connection with a least one of the different aspects of this disclosures or the embodiments and implementations described herein with regard to the drawings.

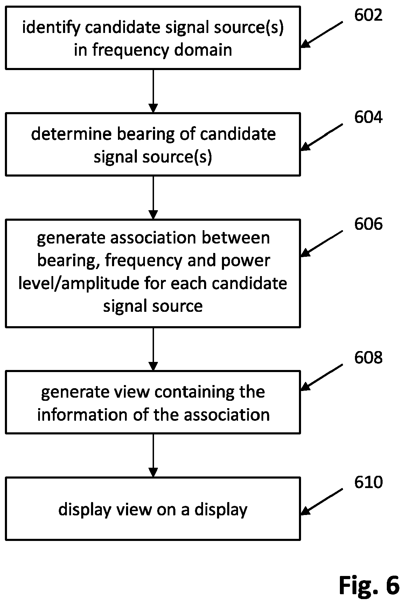

In another example embodiment, execution of the instructions stored in the one or more computer readable media 504 by one or more processors 506 of the device 502 may cause the device 502 to implement the aspects of the disclosure related to the (further) processing of the discretized radio signals received from the antenna elements and the generation of views based on the processing results by means of a display unit 508. Although the display unit 508 is shown as part of the device 502 in Fig. 5, the display device 508 may be also separate from the device 502, e.g. a separate display device, in some exemplary alternative implementations. For example, the device 502 may implement the processes described in connection with Figs. 6 to 14 herein below.

The examples embodiments and implementations thereof may also be implemented in methods, means for performing acts or blocks of the methods, at least one machine-readable medium including executable instructions that, when performed by a machine (e.g. one of switches 204, 304-1, 304-2, one of receiver units 206, 306-1, 306-2, or RDF device 210, 320, the like) cause the machine to perform acts of the methods or of system 200, 300 or any apparatus thereof for separating (or demultiplexing) time-division multiplexed signals.

Fig. 6 shows an example embodiment of a method for processing radio signals as received, for example, from an antenna array 102 using a system as shown in Figs. 1, 2 or 3. It is assumed for example purposes only that the radio signals are provided in digitized format, i.e. have been subject to ADC, but the method may also process time-continuous radio signals by including an additional step of discretizing the time-continuous radio signals by performing an analog-to-digital conversion. The method as shown in Fig. 6 may be executed by one or more processing units 504, which may for example execute instructions to implement the method. The discretized radio signals may be in the time domain or the frequency domain and include power level or amplitude information of the radio signals as received by different antenna elements of an antenna array, such as for example antenna elements 102-1 to 102-8 of an antenna array 102. Further, discretized radio signals may be associated with the respective antenna elements from which they are received or corresponding sector information for facilitate DF. Furthermore, the discretized radio signals in the time domain may include I-samples and Q-samples of the radio signal portions as received at the different antenna elements, or the discretized radio signals in the frequency domain may include respective frequency conversions of each of the time-discrete I-samples and Q-samples of the radio signal portions as received at the different antenna elements.

The method includes identifying 602 the candidate signal source(s) in the frequency domain representation of the discrete radio signals received by different antenna elements of an antenna array. In case the discrete radio signals received by different antenna elements of an antenna array are time-discrete signals, they may be subjected to a conversion to the frequency domain. The processing unit 504 or a radio receiver unit 206, 306-1, 306-2 may convert the discrete input signal portions of the different antenna ports (e.g. each of the I-samples and Q-samples) into the frequency domain (e.g. by means of a Fast Fourier Transform (FFT) or Discrete Cosine Transform (DCT)). The resultant frequency domain signals for the different antenna elements may include the power level or amplitude for the different frequencies (or frequency bins) of the input signal portion corresponding to the respective antenna element, and there may be addition association information that associate the so-obtained signals with their corresponding antenna element or the antenna element's receive sector. The number of bins obtained in the frequency domain depends on the size of the conversion used, e.g. the size of the FFT/DCT transform.

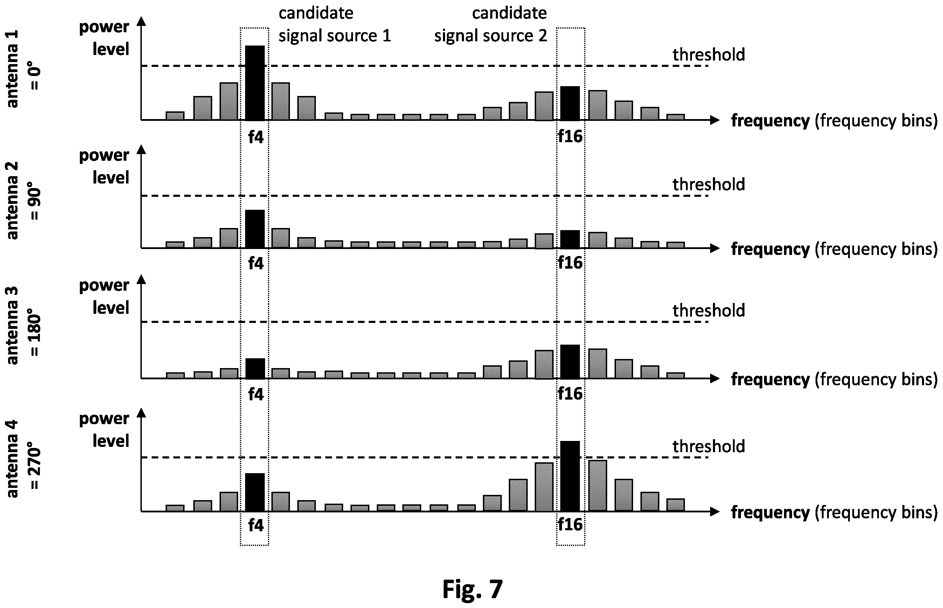

**Fig. 7** is a simplified example to highlight the identification of the candidate signal source(s) in the frequency domain representation of the discrete radio signals received by different antenna elements of an antenna array in accordance with an embodiment. In the example show, it is assumed that the signal information of the discrete radio signals is their power level. Note that 20 frequency bins are shown on the frequency axis yielding an FFT/DCT of size 20, but this is exemplary only. For example, FFT/DCT sizes of 64, 128, 256, 512, 1024, etc. may be used depending on the desired resolution of the frequency bins in the frequency domain and/or time constraints on the speed of the FFT/DCT transform (e.g. a higher time constraint may impose smaller FFT/DCT size). Fig. 7 shows frequency domain representations of four radio signals as received from four antenna elements, numbered antenna 1 (corresponding to a bearing of $0° = 0$ rad), antenna 2 (corresponding to a bearing of $90° = \pi/2$ rad), antenna 3 (corresponding to a bearing of $180° = \pi$ rad) and antenna 4 (corresponding to a bearing of $270 = 3\pi/2$ rad). There are thus 4 bearing angle bins in this example which correspond to bearing at 0°, 90°, 180° and 270°, but this is exemplary only. Note that in praxis the number bearing angle bins and thus resolution of the bearing angle is substantially higher than in this example. The resolution of the bearing angle may be for example correlate with the number of antenna elements of the antenna array 102 being used (e.g., 8 antenna elements in a circular arrangement may allow to define 8 sectors for the bearing) and/or interpolation processing and/or filtering may be used to realize a substantial increase the bearing angle resolution. The information on the antenna element/sector that corresponds to the respective frequency domain representations of the four radio signals may be provided for example by a radio receiver unit 206, 306-1, 306-2. As shown in Fig. 7, it may be assumed that the there is a strong radio signal in the frequency bin f4 and in the frequency bin f16. Here, for example, a strong radio signal denotes a radio signal in a given frequency bin that has a power level (or amplitude) that exceeds some predetermined or configurable threshold. The radio signals and frequency bin f4 and the frequency bin f16 may be thus considered two candidate signal sources in the frequency domain representation, i.e. two candidate signal sources from which radio signals at the frequencies corresponding to frequency bin f4 and frequency bin f16 are received.

The method further includes determining 604 a bearing of candidate signal source(s). This may involve analyzing the power level (or amplitude) information for each candidate signal source and of each of the antenna elements to determine a direction/bearing from which the radio signals may be received from the candidate signal source(s). For example, and staying with the simplified example in Fig. 7, there are two potential signal sources at frequency bins f4 and f16. For the candidate signal source 1 at frequency bin f4, the signal in frequency bin f4 is strongest at antenna 1, which is associated with the bearing angle of 0° in this example. The signal power of the signals at frequency bin f4 received at antenna 2 and antenna 4 (associated with the bearings 90° and 270°) is somewhat lower, and the signal power at frequency bin f4 is lowest for antenna 3 (associated with the bearing 180°). Hence, it may be determined in step 604 that the bearing of candidate signal source 1 at frequency bin f4 is 0°. Similarly, candidate signal source 2 at frequency bin f16 shows the strongest receive power for the signal received with antenna 4, yielding the bearing of candidate signal source 2 at frequency bin f16 to be 270°. Note that this is only a simplified example of DF to highlight the principles of this step. The determination of the bearing angle of the signal from the given signal source is step 604 may involve more complex data processing and/or filtering to yield, e.g. a resolution of the bearing angles of $1° = \pi/180$ or lower.

In step 606 of the method in Fig. 6, the available information is combined (e.g. using a suitable data format) to generate association between bearing, frequency and power level/amplitude for each candidate signal source. For example, candidate signal source 1 has an association of information, yielding its received signal being received at a frequency corresponding to frequency bin f4 with a power level corresponding to the value of the FFT transform at frequency bin f4 and the signal having a bearing of 0°. For example, this information may be stored in an array, where for example the bearing and frequency bin of the signal source may be used as an index, and the value of the array representing the power level (e.g. $A(bearing, frequency\ bin)_i = power\ level_i$ where i designates the different signal sources). Note that it is of course possible to use another multidimensional array (e.g. $A(signal\ source, bearing, frequency\ bin) = power\ level$) or indexing scheme to maintain the information of the association. Note that instead of maintaining a power level (and/or amplitude) in said association, the association may simply indicate the presence of power (and/or a signal amplitude) using a binary value (e.g. $A(bearing, frequency\ bin)_i = 1$) or some valued derived from the power level.

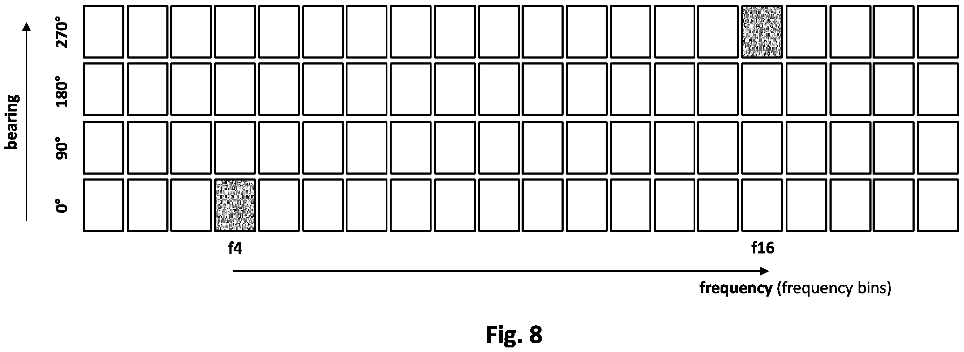

In step 608 of the method in Fig. 6, a view containing the information of the association may be generated for subsequent display in step 610. For example, the association could be represented in a (two-dimensional or three-dimensional) view. For example, a view may use Cartesian coordinates (x, y, and optionally z), polar coordinates (r, φ) or spherical coordinate (r, θ, φ). Using a two-dimensional view based on Cartesian coordinates, the view might show along one axis (e.g. x-axis) the frequency and on another axis (e.g. y-axis) the bearing, and yields the power level of the signal sources at the corresponding coordinates of the frequency bin and bearing angle of the associations. Using a two-dimensional view based on polar coordinates, the frequency might be mapped to the radius r of the polar coordinates and the bearing angle may be the angle $\varphi$ of the polar coordinates, wherein the power level of the signal sources at the corresponding polar coordinates of the frequency bin and bearing angle of the associations. The resolution of the frequency axis may correspond that of the frequency bins (e.g. depending on FFT/DCT size) and the resolution of the bearing axis may correspond to the resolution of the bearing angles that can be determined in step 604. A simplified example of a two-dimensional view of the associations for the candidate signal sources 1 and 2 as determined in step 606 is shown in **Fig. 8**. The view in Fig. 8 uses Cartesian coordinates. Considering the simplified example in Fig. 7, the view may indicate that there is a received power at frequency bin f4 at bearing 0° (corresponding to candidate signal source 1) and a received power at frequency bin f16 at bearing 270° (corresponding to candidate signal source 2). In this example, the power information is brightness coded using a grey-scale value indicative of the strength of the power signal at the given frequency bin and bearing. Alternatively, a color coding of the power information may be used. The view as for example shown in Fig. 8 may then be provided to some display device (e.g. a display screen) for displaying 610 the view.

As noted above, the discretized radio signals processed may comprise one or more sets of time discrete radio signals. Each set represents radio signals received by the different antenna elements of the antenna array. For example, each set may correspond to a rotation through antenna elements of the antenna array as described in connection with the previous aspects of the disclosure herein above. The method shown in Fig. 6 may be for example executed for each set of time discrete radio signals to generate/update the view that is displayed to the user on the display device. For example, one rotation through antenna elements of the antenna array may take approx. 100 $\mu$s, so that a new set of radio signals form the antenna elements is received approx. every 100 $\mu$s. This may impose corresponding timing constraints for the speed of the FFT/DCT transform when implementing real-time processing of the sets of radio signals. The continuous update of the view (e.g. substantially in real-time) as the sets of time discrete radio signals become available for processing may also allow to promote a more intuitive understanding of the direction (bearing), frequency and confidence or stability of radio signals of a radio source being received from a given bearing and with the given frequency. Further, the continuous update of the view could be used to realize a persistence display (also referred to as phosphor display) of accumulated signal information that may yield the stability of a signal source emitting a radio signal at a given frequency from the detected bearing.

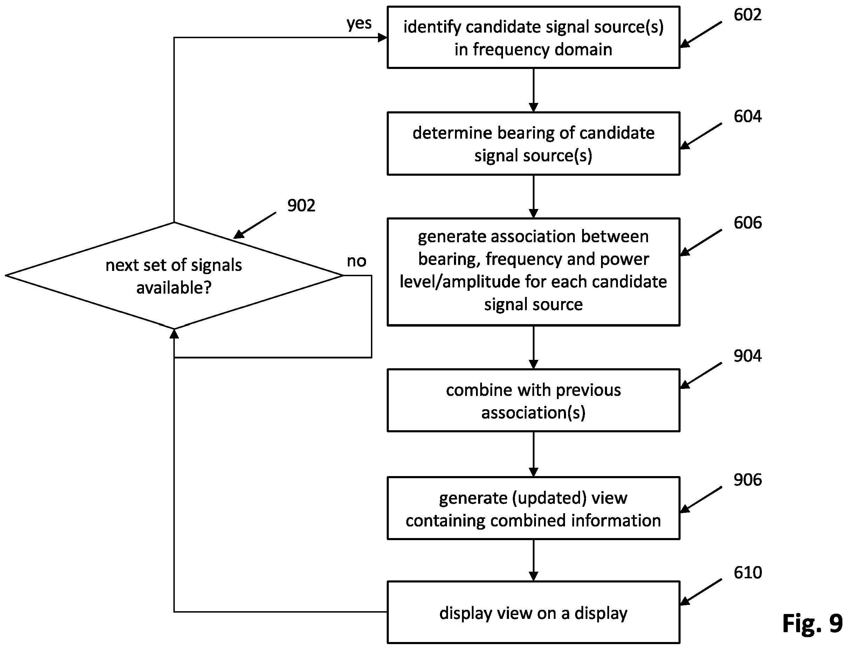

**Fig. 9** shows an example embodiment of a method for processing sets of radio signals as received, for example, from an antenna array 102 using a system as shown in Figs. 1, 2 or 3. Similar to the method described in connection with Fig. 6, it is assumed for example purposes only that the radio signals are provided in digitized format, i.e. have been subject to ADC, but the method may also process time-continuous radio signals by including an additional step of discretizing the time-continuous radio signals by performing an analog-to-digital conversion. The method as shown in Fig. 9 may be executed by one or more processing units 504, which may for example execute instructions to implement the method. The discretized radio signals may be in the time domain or the frequency domain and include power level or amplitude information of the radio signals as received by different antenna elements of an antenna array, such as for example antenna elements 102-1 to 102-8 of an antenna array 102. Further, discretized radio signals may be associated with the respective antenna elements from which they are received or corresponding sector information for facilitate DF. The discretized radio signals in the time domain may include I-samples and Q-samples of the radio signal portions as received at the different antenna elements, or the discretized radio signals in the frequency domain may include respective frequency conversions of each of the time-discrete I-samples and Q-samples of the radio signal portions as received at the different antenna elements.

The sets of radio signals may be processed substantially in real-time as they arrive. For example, in step 902, it is checked whether a (new) set of radio signals is received. Once there is a new set of radio signals, the candidate signal source(s) are identified 602 in frequency domain, and the bearing of candidate signal source(s) can be determined 604 based on the current set of radio signals as described in connection with Figs. 6 to 8 above. Further, the association between bearing, frequency, and power level/amplitude for each candidate signal source for the current set of radio signals is generated in step 606 as described in connection with Figs. 6 to 8 above.

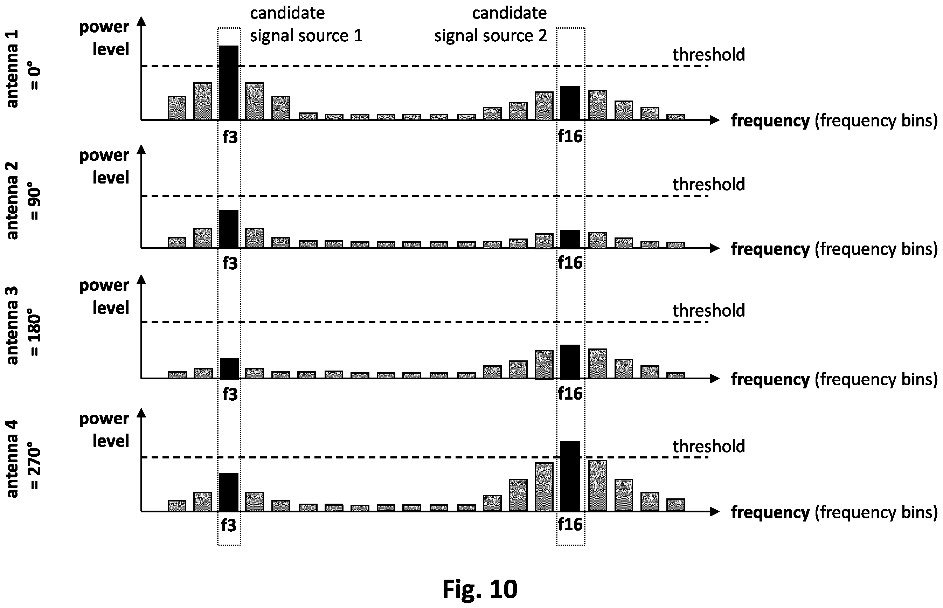

In step 904, the association as obtained for the current set of radio signals in step 604 is combined with previous associations obtained in previous iterations. This step is only performed if the has been at least one previous iteration, otherwise the process as shown in Fig. 6 is performed. For example, Fig. 10 may be considered illustrating an example of steps 602, 604 and 608 for a current set of radio signals, whereas Fig. 7 may be considered illustrating an example of steps 602, 604 and 608 for a previous set of radio signals processed earlier and noting that the current set and previous set of radio signals is received from the same candidate signal sources. As shown in Fig. 10, the step 606 may determine two new candidate signals sources 1 and 2 for the current set of radio signals being processed. In this example, the candidate signal source 1 may still have a bearing of 0° (step 606), yet the strongest power level (and/or amplitude) has slightly shifted in frequency from frequency bin f14 to frequency bin f3. The second candidate signal source 2 is still received at frequency bin 16 and has a bearing of 270° (step 606) as in Fig. 7. Accordingly, in step 904, the associations for the previous set of radio signal and the current set of radio signals may be for example combined by aggregation. For example, when maintaining the associations of different iterations in a two-dimensional data array $A(bearing, frequency\ bin)_{i,j} = power\ level_{i,j}$ where $i$ designates the different signal sources and $j$ designates the set of radio signals of the iteration, the aggregation for the current set of may be for example a simple sum of the two two-dimensional data arrays determined for the previous set of radio signal and the current set of radio signals, i.e.

$$A(bearing, frequency\ bin)_{1,1} + A(bearing, frequency\ bin)_{1,2}$$

for candidate signal source 1 (i=1), where j=1 denotes the association of the previous radio signals and j=2 denotes the association of the current radio signals, and likewise

$$A(bearing, frequency\ bin)_{2,1} + A(bearing, frequency\ bin)_{2,2}$$

for candidate signal source 1 (i=2). Also, other aggregation methods may be used, for example, forming an average or mean value or forming a weighted summation, where the weight of a previous association is lower than the weight of a current association. Another alternative may be to use aging of the previous associations when forming the aggregation in step 904. Further or alternatively, the aggregation may also consider only a predetermined or configurable number of previous associations in the aggregation (e.g. assuming a processing time of approx. 100 μs, the associations of the last 1 to 2 seconds may be accumulated, equivalent). Weighting, aging and/or considering only a predetermined or configurable number of previous associations may for example allow to implement a persistence display. The aggregation formed in step 904 may be subsequently used to generate a view in step 906. Step 906 is substantially similar to step 608, the difference of these steps being the use of the aggregation to form the (updated) view in step 906. The generated (updated) view may then be presented on a display device in step 610. Note that steps 906 and 610 might not be performed for every set of radio signals, but only every n$^{th}$ set of radio signals. The value of n, i.e. the frequency of those steps, may be matched with the frame rate that can be displayed by the display device (e.g. 50 or 60 frames/second).

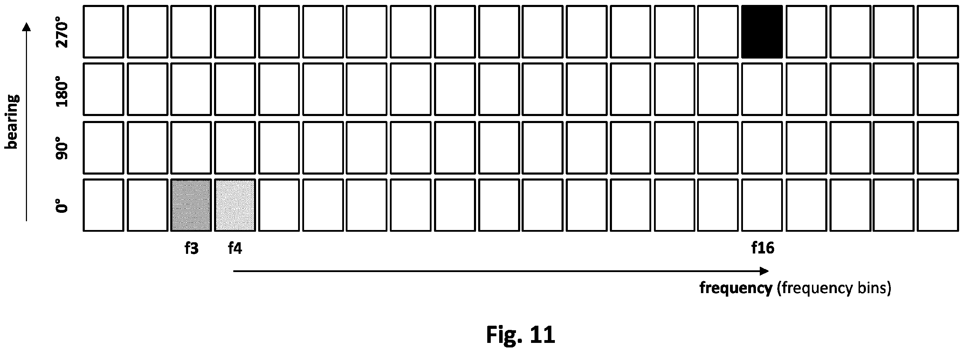

An example of an aggregation of a previous association (see Fig. 7) and a current association (see Fig. 10) by summation is exemplified in Fig. 11 showing a view formed by aggregation (step 904) using Cartesian coordinates. Considering the candidate signal source 2, the previous and current sets of radio signals indicated a bearing of 270° at frequency bin f16, so that the power levels (or amplitudes) of the aggregations for the previous and current sets of radio signals are summed as yielded by the (now) black rectangle (compare to Fig. 8). For the candidate signal source 1, there has been a shift in the frequency from frequency bin f4 to frequency bin f3, resulting in the aggregation for candidate signal source 1 to show two grey rectangles for the previous and current sets of radio signals at the bearing of 0°.

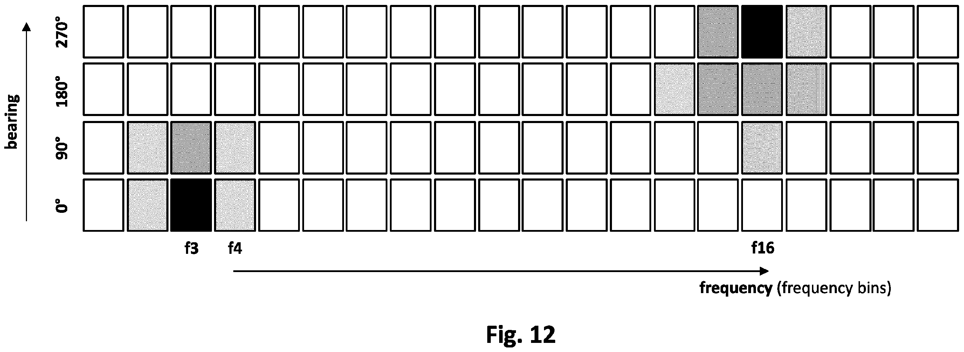

Fig. 12 shows another example view of an aggregation of a current association of a current set of radio signals with several previous associations of previous sets of radio signals. In this view the radio signals of the first and second candidate radio sources 1 and 2 have been shifting slightly in frequency and bearing in the different iterations of processing the sets of radio signals. Yet, the color coding yields that candidate radio source 1 is most likely transmitting at the frequency of frequency bin f4 and from a bearing at 0°, whereas candidate radio source 2 is most likely transmitting at the frequency of frequency bin f16 and from a bearing at 270°. As noted, the frequency resolution and resolution of the bearing angle in Figs. 6 to 12 is very coarse and exemplary only to highlight and understand the concepts and ideas of generating the associations, aggregation of the associations and forming views based on the (aggregated) associations.

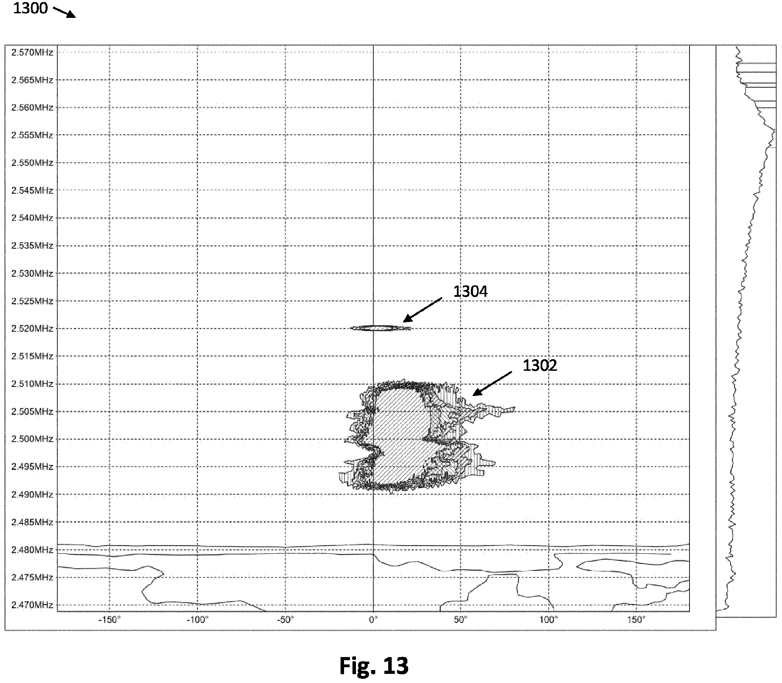

Fig. 13 shows an example view 1300 of an aggregation of associations for a substantially higher resolution of frequency and bearing providing a more realistic illustration of the generated views. In this view 130, the x-axis shows the bearing angle, whereas the y-axis shown the frequency (bins). As can be immediately perceived from the view 1300, there a two radio signals likely received two radio signal sources. One radio signal 1304 is sent quite stable at the frequency of 2.520 MHz and with a very small bandwidth from a bearing of approx. 0°. The uncertainty in the bearing of this radio signal 1304 is relatively low, yielding that the signal source might be stationary. There is further a second radio signal 1302 which might be from another candidate signal source. This radio signal seems to be a broadband signal in the range between approx. 2.490 MHz to approx. 2.510 MHz (i.e. having a bandwidth of approx. 20 MHz). The bearing of the second radio signal 1302 is approx. 0° to 45°, and there seems some ambiguity in the bearing of the source of radio signal 1302. For example, this might be due to the source of radio signal 1302 being non-stationary. The differently hatched areas of radio signal 1302 are used to indicate different values of the accumulated power levels/amplitudes at the different bearings and frequencies. The detected frequencies deviating from each other in a bandwidth of 20 MHz may be considered yielding that the radio signal source performs frequency hopping (e.g. a Bluetooth device).

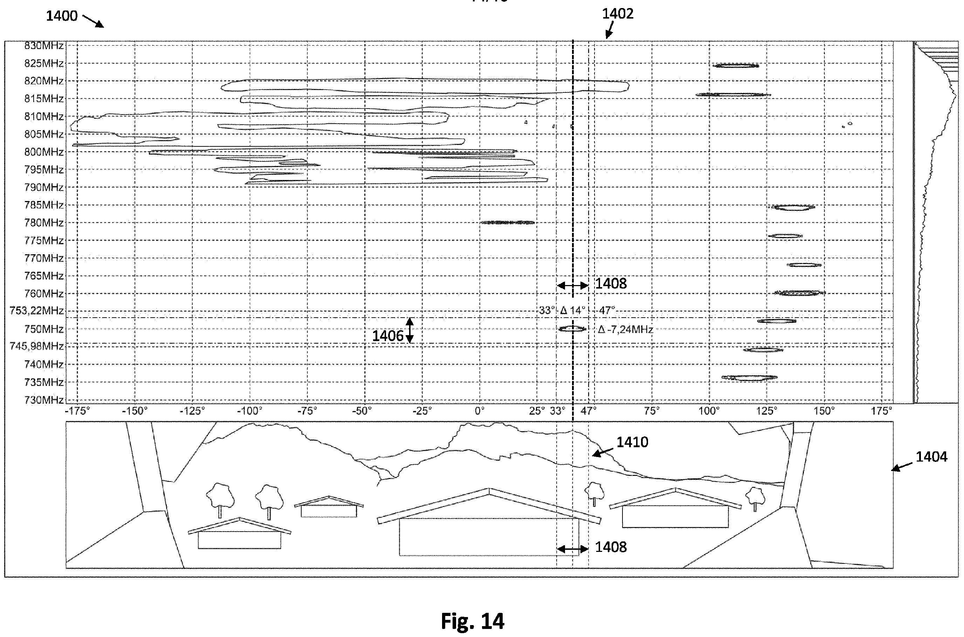

Fig. 14 shows another example view 1400 of an aggregation of associations for a substantially higher resolution of frequency and bearing providing a more realistic illustration of the generated views. In comparison to the view 1300 of Fig. 13, the view 1400 of Fig. 14 further includes a camera image which is aligned with the bearings as determined as part of the RDF operation for the different radio signals. The image of the camera may be shown next to the axis indicating the bearing angle so that the bearing shown on the axis is aligned with the image in the view 1400. This facilitates that the bearing determined for radio signals of a given candidate radio source may be also visualized in the image of the camera. This form of presentation of the bearing information for the different radio signals provides the user with a more intuitive and easier understanding of the direction from which radio signals are received. For example, in view 1400, the upper portion 1402 of the view substantially corresponds to the view 1300 of Fig. 13, except for the frequency axis and bearing axis being exchanged, so that the bearing is shown on the x-axis and the frequency is shown on the y-axis of the upper portion 1402. Below the upper portion 1402 (in y-direction), an image portion 1402 shows an image of the surrounding which is aligned with the bearing as indicated on the x-axis. Alternatively, the image portion 1402 may also be shown above the upper portion 1402. In radio signals received from bearings in between 33° and 47° (see range 1408) are received at a quite stable frequency of 750 MHz (with frequency deviation of 7.24 MHz) in range 1406. The center of the bearings determined for the radio signal and/or boarders thereof may be marked with indicators on the x-axis. The indicators extend into the image portion 1402 to highlight the direction from which the radio signal is received with the image.

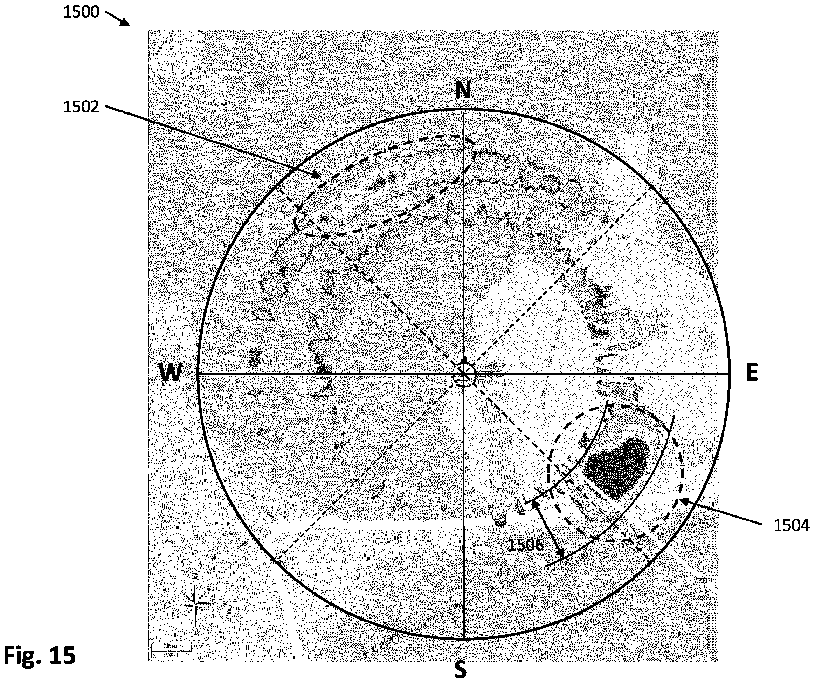

**Fig. 15** shows another example view 1500 of an aggregation of associations for a substantially higher resolution of frequency and bearing using polar coordinates and their overlay with a map in accordance with an example embodiment. In the shown example, two radio signal sources appear to emit radio signals 1502 and 1504. The aggregation of associations described above are mapped to polar coordinates, wherein the frequency (bin) of each association is mapped to the radius component of the polar coordinate, whereas the bearing angle (bin) is mapped to an angle component of the polar coordinate. Although not shown in Fig. 15, a range of frequency as mapped to the different radii of the polar coordinate system may be also indicated in the view. The representation of the accumulation of the associations is overlaying a map. This representation of the associations that are overlayed on a map provide the user with a more intuitive and easier understanding of the direction from which radio signals are received. The 0°-bearing may be aligned with the geographic north (N) direction, whereas geographic east (E) direction, geographic south (S) direction and geographic west (W) direction are aligned with a bearing of 90°, 180° and 270° respectively. However, this is exemplary only and the alignment with geographic coordinates may be chosen or configured according to the user's needs. The bearing of the radio signal 1502 is not stable and there is a substantive deviation on the bearing angles towards the signal source that are detected by the RDF processing. As indicated by the brightness coded power level (and/or amplitude) information, the most likely signal source direction seems around 337.5°, noting that some larger number of aggregated associations also yield the signal source bearing to be at around 315°. The range of frequencies of radio signals (which is represented by the range of radii) seems rather small. Radio signal 1504 is substantially similar to radio signal 1302, in that the frequency seems varying as indicated by the range 1506 of the radii of radio signal 1504. The variation of the frequencies may for example yield that the radio signal source performs frequency hopping (e.g. a Bluetooth device). The bearing angle seems relatively stable yielding a direction of the radio signal source of radio signal 1504 in a direction of about 303.75°. The underlying map as shown in Fig. 15 may be a common map view, but also other views of the map, e.g. a street view could be underlying the graphical representation of the aggregation of associations using polar coordinates.

For example, in case the device 502 is configured to perform triangulation (e.g. by processing sets of radio signals obtained from different, spatially separated antenna arrays), the map location (geographical) position of the radio signal source could be indicated in the map. In this latter case, the bearing would be still mapped to the angle of the polar coordinates, and the radius would be selected to match the distance of the radio source from the map center as obtained by triangulation. In this case, for example, the associations may include the bearing of the signal source, direction of the signal source and the power level information (and/or amplitude information) and the representation of radio signal 1504 as shown in Fig. 15 might be indicative with the approximated geographical location of the radio signal source. Optionally, the association may also include a frequency bin indicative of a frequency the radio signal of said respective signal source.

The examples embodiments and implementations thereof may also be implemented in methods, means for performing acts or blocks of the methods, at least one machine-readable medium including executable instructions that, when performed by a machine (e.g. a device 502 or the like) cause the machine to perform acts of the methods described in connection with Figs. 6 to 15 above.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

**Claims**

1. A device, comprising:

   a processing unit configured to process discretized radio signals received by different antenna elements of an antenna array;
   wherein the processing unit is configured to generate, for each of one or more signal sources of which radio signals are contained in the received signals, an association between a bearing angle bin indicative of a bearing of the respective signal source and a frequency bin indicative of a frequency the radio signal of said respective signal source, and further signal information comprising at least one of power level information of the radio signal of the respective signal source, amplitude information of the radio signal of the respective signal source and/or information on the modulation scheme of the radio signal of the respective signal source; and

a display unit configured to display a view that shows a range of bearing angles including the bearing angle bin of at least one of the one or more signal sources, and a range of frequencies including the frequency bin at least one of the one or more signal sources,

wherein the view further visualizes, for each of said at least one of the one or more signal sources, an information of the signal source derived from the signal information of the respective signal source at its associated frequency and bearing.

2. The device according to claim 1, wherein the discretized radio signals processed by the processing unit comprise one or more sets of time discrete radio signals, wherein each set represents radio signals received by the different antenna elements of the antenna array, and

wherein processing unit is configured to convert, for each of the antenna elements, the time discrete radio signals corresponding to the antenna elements into the frequency domain to obtain frequency domain representations of the radio signals for the different antenna elements.

3. The device according to claim 1 or 2, wherein the processor unit is further configured to identify the one or more signal sources based on the signal information in frequency domain representations of the of the radio signals for the respective antenna elements, wherein a signal source is identified by identifying a frequency bin having a signal information fulfilling a predetermined selection criterion/predetermined selection criteria.

4. The device according to one of claims 1 to 3, wherein the signal information comprise power level information or amplitude information, and the processor unit is further configured perform, for each of the one or more signal sources, direction finding based on the power level or amplitude information of frequency bins associated with the respective signal source in the radio signals of the antenna elements to obtain a bearing angle bin for the respective signal source being indicative of its bearing, thereby establishing said association.

5. The device according to one of claims 1 to 4, wherein the information visualized for each of the at least one signal source is the signal information of the respective signal source at its associated frequency and bearing.

6. The device according to one of claims 1 to 5, wherein the information visualized for each of the at least one signal source is color coded or brightness coded.

7. The device according to one of claims 1 to 6, wherein processing unit is configured to receive a sequence of sets of time discrete radio signals, wherein each set represents radio signals received by the different antenna elements of the antenna array,

wherein the processing unit is further configured to process each current set of said sequence of sets of time discrete radio signals, by:

generating, for each of the one or more signal sources of which radio signals are contained in the received signals, an association between a bearing angle bin indicative of a bearing of the respective signal source and a frequency bin indicative of a frequency the radio signal of said respective signal source comprised in the current set of time discrete radio signals, and further signal information comprising at least one of power level information of the radio signal of the respective signal source comprised in the current set of time discrete radio signals, amplitude information of the radio signal comprised in the respective signal source comprised in the current set of time discrete radio signals and/or information on the modulation scheme of the radio signal comprised in the respective signal source comprised in the current set of time discrete radio signals; and

combining the signal information of the association of the current set of time discrete radio signals with the signal information of the association of one or more previously processed sets of time discrete radio signals;

a display unit configured to successively display views, where each of the views shows a range of bearing angles including the bearing angle bin of at least one of the one or more signal sources, and a range of frequencies including the frequency bin at least one of the one or more signal sources,

wherein the view further shows, for each of said at least one of the one or more signal sources, an information derived from the combined signal information of the respective signal source at its associated frequency and bearing;

wherein optionally the processing unit is configured to accumulate the signal information of the current set of time discrete radio signals with the signal information of the association of one or more previously processed sets of time discrete radio signals to form said combination.

8. The device according to claim 7, wherein the one or more previously processed sets of time discrete radio signals is a predetermined or configurable number of one or more previously processed sets of time discrete radio signals, so that the successive display of the views realizes a persistence display of the signal information.

9. The device according to one of claims 1 to 8, wherein the view further comprises a camera image that is viewed adjacent to the information of the signal source derived from the signal information of the one or more signal sources and is aligned with the bearing angle axis.

10. A method, comprising:
processing discretized radio signals received by different antenna elements of an antenna array, wherein said processing comprises:

generating, for each of one or more signal sources of which radio signals are contained in the received signals, an association between a bearing angle bin indicative of a bearing of the respective signal source and a frequency bin indicative of a frequency the radio signal of said respective signal source, and further signal information comprising at least one of power level information of the radio signal of the respective signal source, amplitude information of the radio signal of the respective signal source and/or information on the modulation scheme of the radio signal of the respective signal source; and
generating a view that shows a range of bearing angles including the bearing angle bin of at least one of the one or more signal sources, and a range of frequencies including the frequency bin at least one of the one or more signal sources, wherein the view further visualizes, for each of said at least one of the one or more signal sources, an information of the signal source derived from the signal information of the respective signal source at its associated frequency and bearing; and
causing a display unit to display the view.

11. The method according to claim 10, further comprising:

identifying the one or more signal sources based on the signal information in frequency domain representations of the of the radio signals for the respective antenna elements, wherein a signal source is identified by identifying a frequency bin having a signal information fulfilling a predetermined selection criterion/predetermined selection criteria; and.
wherein optionally the signal information comprise power level information or amplitude information, and the method further comprises performing, for each of the one or more signal sources, direction finding based on the power level or amplitude information of frequency bins associated with the respective signal source in the radio signals of the antenna elements to obtain a bearing angle bin for the respective signal source being indicative of its bearing, thereby establishing said association.

12. The method according to claim 10 or 11, further comprising:

receiving a sequence of sets of time discrete radio signals, wherein each set represents radio signals received by the different antenna elements of the antenna array,
processing each current set of said sequence of sets of time discrete radio signals, the processing including:

generating, for each of the one or more signal sources of which radio signals are contained in the received signals, an association between a bearing angle bin indicative of a bearing of the respective signal source and a frequency bin indicative of a frequency the radio signal of said respective signal source comprised in the current set of time discrete radio signals, and further signal information comprising at least one of power level information of the radio signal of the respective signal source comprised in the current set of time discrete radio signals, amplitude information of the radio signal comprised in the respective signal source comprised in the current set of time discrete radio signals and/or information on the modulation scheme of the radio signal comprised in the respective signal source comprised in the current set of time discrete radio signals; and
combining the signal information of the association of the current set of time discrete radio signals with the signal information of the association of one or more previously processed sets of time discrete radio signals;

generating views, where each of the views shows a range of bearing angles including the bearing angle bin of at least one of the one or more signal sources, and a range of frequencies including the frequency bin at least one of the one or more signal sources, wherein the view further shows, for each of said at least one of the one or more signal sources, an information derived from the combined signal information of the respective signal source at its associated frequency and bearing;

causing the display unit to successively display the views as they are generated; and.

optionally accumulating the signal information of the current set of time discrete radio signals with the signal information of the association of one or more previously processed sets of time discrete radio signals to form said combination.

13. The method according to claim 12, wherein the one or more previously processed sets of time discrete radio signals is a predetermined or configurable number of one or more previously processed sets of time discrete radio signals, so that the successive display of the views realizes a persistence display of the signal information.

14. The method according to one of claims 10 to 13, wherein the view further comprises a camera image that is viewed adjacent to the information of the signal source derived from the signal information of the one or more signal sources and is aligned with the bearing angle axis.

15. One or more computer readable media storing instructions that when executed by one or more processing units of a device, cause the device to perform the method of one of claims 10 to 14.

Fig. 1

Broadband Noise Generator

202

200

102

102-1

102-2

102-8

102-3

102-7

102-4

102-6

102-5

204

208

206

210

RX unit

RDF device

Fig. 2

**Fig. 3**

receive multiplexed
radio signals ← 402

↓

recover cycle of multiplexed
radio signals ← 404

↓

separate the multiplexed
signals into induvial signals ← 406

recover multiplex structure
of the multiplexed signals

recover antenna signals
from multiplex structure

↓

provide antenna signals to
RDF processing ← 408

**Fig. 4**

EP 4 468 012 A1

**device** — 502

computer-readable storage
medium/media — 504

one or more processors — 506

display unit — 508

display unit — 508

**Fig. 5**

identify candidate signal source(s) in frequency domain — 602

determine bearing of candidate signal source(s) — 604

generate association between bearing, frequency and power level/amplitude for each candidate signal source — 606

generate view containing the information of the association — 608

display view on a display — 610

**Fig. 6**

EP 4 468 012 A1

**Fig. 7**

Fig. 8

Fig. 9

**Fig. 10**

**Fig. 11**

frequency (frequency bins)

f16

f4

f3

bearing

270° 180° 90° 0°

Fig. 12

**Fig. 13**

EP 4 468 012 A1

**Fig. 14**

EP 4 468 012 A1

Fig. 15

Europäisches
Patentamt

European
Patent Office

Office européen
des brevets

# EUROPEAN SEARCH REPORT

Application Number

EP 23 17 5178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 724 680 B2 (AGILENT TECHNOLOGIES INC [US]) 25 May 2010 (2010-05-25) | 1-7, 10-12,15 | INV. G01S3/04 |
| Y | * figures 2,3 * | 9,14 | G01S3/16 |
| A | * column 3, line 50 - column 4, line 18 * * column 5, line 32 - line 36 * ----- | 8,13 | G01S3/18 |
| A | DE 27 23 106 C2 (LICENTIA GMBH) 9 December 1982 (1982-12-09) * column 2, line 62 - column 3, line 24 * * column 4, line 9 - line 24 * ----- | 1-15 | |
| A | US 2014/159954 A1 (STODDARD ROBERT EUGENE [US]) 12 June 2014 (2014-06-12) * figure 4 * * paragraph [0047] - paragraph [0049] * ----- | 1-15 | |
| Y | US 2014/036065 A1 (OAKLEY PETER Q [US] ET AL) 6 February 2014 (2014-02-06) * figure 2 * ----- | 9,14 | |

TECHNICAL FIELDS
SEARCHED (IPC)

G01S

The present search report has been drawn up for all claims

| Place of search | Date of completion of the search | Examiner |
|---|---|---|
| Munich | 16 November 2023 | Hekmat, Taymoor |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 17 5178

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2023

| Patent document cited in search report | | Publication date | Patent family member(s) | | Publication date |
|---|---|---|---|---|---|
| US 7724680 | B2 | 25-05-2010 | NONE | | |
| DE 2723106 | C2 | 09-12-1982 | NONE | | |
| US 2014159954 | A1 | 12-06-2014 | NONE | | |
| US 2014036065 | A1 | 06-02-2014 | AU | 2013213666 A1 | 20-02-2014 |
| | | | BR | 102013019799 A2 | 08-09-2015 |
| | | | CA | 2823097 A1 | 06-02-2014 |
| | | | CN | 103576124 A | 12-02-2014 |
| | | | EP | 2696213 A2 | 12-02-2014 |
| | | | JP | 6297278 B2 | 20-03-2018 |
| | | | JP | 2014035347 A | 24-02-2014 |
| | | | MX | 340450 B | 08-07-2016 |
| | | | US | 2014036065 A1 | 06-02-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **RHODE** ; **SCHWARZ**. Introduction into Theory of Direction Finding. *Radiomonitoring & Radiolocation Catalog 2010/2011*, https://cdn.rohde-schwarz.com/us/campaigns_2/a_d/Introduction-Into-Theory-of-Direction-Finding.pdf